# EUROPÄISCHE PATENTSCHRIFT

(11) **EP 3 898 459 B1**
(45) Veröffentlichungstag und Bekanntmachung des Hinweises auf die Patenterteilung: **29.05.2024**
(21) Anmeldenummer: 19835643.8
(22) Anmeldetag: 19.12.2019
(51) Int. Cl.: B65G 13/06, B65G 23/08, B65G 43/00, B65G 43/10

(54) **MOTORBETRIEBENE FÖRDERROLLE MIT INTEGRIERTER STEUERUNG**
MOTOR-OPERATED CONVEYOR ROLLER WITH INTEGRATED CONTROLLER
ROULEAU DE TRANSPORT MOTORISÉ À COMMANDE INTÉGRÉE

(30) Priorität: 21.12.2018 DE 102018133478
(43) Veröffentlichungstag der Anmeldung: 27.10.2021
(73) Patentinhaber: Interroll Holding AG, 6592 Sant' Antonino (CH)
(72) Erfinder: HAMPE, Andreas, 41836 Hückelhoven (DE); HENZE, Herbert, 41836 Hückelhoven (DE)
(74) Vertreter: Kohlhof, Stephan
(86) Internationale Anmeldenummer: PCT/EP2019/086241
(87) Internationale Veröffentlichungsnummer: WO 2020/127686

(56) Entgegenhaltungen:
- WO-A1-2012/154650
- WO-A2-2018/024917
- DE-A1- 10 131 019
- DE-A1-102016 124 689
- DE-U1-202012 005 380

## Beschreibung

Die Erfindung betrifft eine motorbetriebene Förderrolle, umfassend einen drehbar um eine Rollenachse gelagerten Rollenkörper, eine innerhalb des Rollenkörpers angeordnete Antriebseinheit, die ausgebildet ist, um eine Rotationsbewegung um die Rollenachse zwischen einem Achselement und dem Rollenkörper zu erzeugen und eine Steuerungseinheit, die ausgebildet ist, um ein Steuerungssignal zu empfangen und in Abhängigkeit des Steuerungssignals die Antriebseinheit zum Antrieb mit einer durch das Steuerungssignal vorbestimmten Charakteristik anzusteuern.

Motorbetriebene Förderrollen dieser Bauart werden in Förderanordnungen eingesetzt. Oftmals sind hierbei mehrere motorbetriebene Förderrollen in einer Förderanlage verbaut. Die Förderanlage ist hierbei häufig aus mehreren Förderzonen aufgebaut, die von einem zu fördernden Gegenstand nacheinander durchlaufen werden. Jede Förderzone weist hierbei zumindest eine motorbetriebene Förderrolle auf. Durch diese Aufbauweise können in der Fördervorrichtung mehrere Gegenstände gleichzeitig gefördert werden und hierbei ein Kontakt zwischen diesen Gegenständen vermieden werden, indem die motorbetriebenen Förderrollen der einzelnen Förderzonen entsprechend angesteuert werden. Dies realisiert die sogenannte staudrucklose Förderung, die in vielen Anwendungen heute angestrebt wird, um eine hohe Sicherheit vor Beschädigungen des Förderguts zu gewährleisten.

So ist es beispielsweise bekannt, eine motorbetriebene Förderrolle staudrucklos im Einzelplatzabzug anzusteuern. In diesem Betriebsmodus wird die Förderrolle nur zur Förderung eines Gegenstands in ihrer Förderzone angesteuert, wenn die stromabwärts liegende, benachbarte Förderzone frei ist. Eine andere staudrucklose Betriebsweise ist der sogenannte Blockabzugsmodus. Im Blockabzugsmodus werden alle motorbetriebenen Förderrollen entlang benachbarter Förderzonen gleichzeitig angesteuert, sodass auch bei benachbarten, mit Gegenständen besetzten Förderzonen eine Förderung ohne Kontakt möglich ist, da die Förderzone, in der ein Gegenstand hineingefördert wird, gleichzeitig den Gegenstand, der bisher in dieser Förderzone war, herausbefördert.

Zur Steuerung der motorbetriebenen Förderrollen in solchen Fördervorrichtungen sind verschiedene Steuersysteme vorbekannt. Grundsätzlich sind Steuerungssysteme vorbekannt, bei denen alle motorbetriebenen Förderrollen durch eine übergeordnete, zentrale Steuerungseinheit (beispielsweise als SPS) angesteuert werden. Bei dieser Art und Weise des Steuerungssystems sind entsprechende Datenübertragungen aus den Förderzonen zu der zentralen Steuerungseinheit und von der zentralen Steuerungseinheit zu den Förderzonen einzurichten, um die notwendige Informationslage in der zentralen Steuerungseinheit sicherzustellen und um die entsprechenden Steuerungsbefehle von der zentralen Steuerungseinheit zu den einzelnen motorbetriebenen Förderrollen in den Förderzonen zu leiten. Solche Systeme sind sowohl mittels einer Einzelverbindung von jeder Förderzone zu der zentralen Steuerungseinheit bekannt als auch als Bus-basierte Systeme.

Weiterhin bekannt sind Steuerungssysteme, bei denen eine, oder zwei motorbetriebene Förderrollen mit einer zu diesen Förderrollen benachbart angeordneten dezentralen Steuerungseinheit verbunden sind und entlang der Fördervorrichtung dementsprechend mehrere solche dezentralen Steuerungseinheiten angeordnet sind. Diese lokal entlang der Förderstrecke verteilten Steuerungseinheiten sind dabei untereinander zur Signalübertragung miteinander gekoppelt. Diese Koppelung kann sich auf jeweils benachbarte Steuerungseinheiten beschränken (sogenannte Peer-to-Peer Verbindung), sodass jede Steuerungseinheit lediglich von ihrer stromaufwärts und ihrer stromabwärts gelegenen Steuerungseinheit Signale empfängt und zu dieser senden kann. Auch hier sind Bus-basierte Systeme bekannt, bei denen die Steuerungseinheiten durch eine SignalBusleitung miteinander verbunden sind.

Steuerungssysteme, bei denen eine oder mehrere motorbetriebene Förderrollen mit einer zu diesen Förderrollen benachbart angeordneten dezentralen Steuerungseinheit verbunden sind und entlang der Fördervorrichtung dementsprechend mehrere solche dezentralen Steuerungseinheiten angeordnet sind, sind aus der WO 2018/024917 A2, der DE 101 31 019 A1, der DE 10 2016 124 689 A1 sowie der DE 20 2012 005 380 U1 bekannt.

Die Erteilungsbehörde sieht in der WO 2018/024917 A2 die Merkmale des Oberbegriffs des Anspruchs 1 als offenbart an.

Nachteilig an der direkten Peer-to-Peer-Verbindung jeweils benachbarter Steuerungseinheiten ist der erhebliche Verkabelungsaufwand, der hiermit einhergeht. Dies kann durch eine Bus-Signalübertragung verbessert werden. Nachteilig an den bisher bekannten Systemen, sei es die zentral angesteuerten Systeme oder die dezentral angesteuerten Systeme ist jedoch, dass komplexere Funktionalitäten nur durch aufwendige Programmierung der Steuerungseinheiten realisierbar sind, die Steuerungseinheiten hierzu separat montiert und gezielt mit bestimmten motorbetriebenen Förderrollen verbunden werden müssen und sich bei Beschädigung einer Steuerungseinheit oder einer Verbindungsleitung von der Steuerungseinheit zur motorbetriebenen Förderrolle eine Gesamtstörung der Fördervorrichtung ergeben kann. Diese kann zudem noch nur mit aufwendigen Installationsmaßnahmen behoben werden. Es ist vor diesem Hintergrund allgemein ein Ziel, eine logische Programmierung der Förderabläufe auf einfache und zuverlässige Weise zu ermöglichen und die hierfür notwendigen Steuerungseinheiten und Steuerungsleitungen in einer möglichst vor Beschädigung besser geschützten Weise anzuordnen.

Diese Aufgabe wird durch eine motorbetriebene Förderrolle der eingangs beschriebenen Art gelöst, die fortgebildet ist durch eine innerhalb des Rollenkörpers angeordnete Steuerungseinheit, die ausgebildet ist, um ein Zustandssignal von außerhalb des Rollenkörpers zu empfangen, in Abhängigkeit des Zustandssignals ein Steuerungssignal, das eine Antriebscharakteristik beschreibt, zu generieren, die Antriebseinheit mittels des Steuerungssignals anzusteuern, ein Eigenzustandssignal, welches das Zustandssignal und/oder die Antriebscharakteristik beschreibt, zu generieren, und dieses Eigenzustandssignal nach außerhalb des Rollenkörpers zu senden.

Mit der erfindungsgemäßen motorbetriebenen Förderrolle wird einerseits die Steuerungseinheit innerhalb des Rollenkörpers angeordnet und ist hierbei dazu ausgebildet, um ein Zustandssignal von außerhalb des Rollenkörpers zu empfangen. Dieses Zustandssignal kann beispielsweise ein Sensorsignal sein und die Steuerungseinheit ist ausgebildet, um auf Grundlage dieses Zustandssignals die Antriebseinheit anzusteuern. Folglich ist innerhalb des Rollenkörpers eine Steuerungseinheit mit vollständiger Ausbildung zur autonomen Steuerung des Förderprozesses durch die motorbetriebene Förderrolle anhand eines von außen zugeführten Zustandssignals angeordnet. Mit der motorbetriebenen Förderrolle kann daher ein autonomer Förderprozess entlang einer gesamten Förderstrecke durch entsprechende Programmierung der Steuerungseinheit realisiert werden, bei dem beispielsweise aufgrund eines zugeführten Sensorsignals die Antriebseinheit angesteuert wird und hierdurch eine Förderungslogik autonom gesteuert werden kann.

Die motorbetriebene Förderrolle gemäß der Erfindung benötigt daher keine externe, außerhalb des Rollenkörpers angeordnete Steuerungseinheit mehr, mit der sie verbunden ist und von der sie Steuerungsbefehle empfängt. Stattdessen ist die erfindungsgemäße Förderrolle ausgebildet, um anhand von Zustandsdaten selbstständig einen Steuerungsablauf auszuführen, also um anhand dieser zugeführten Sensordaten die Bewegung der motorbetriebenen Förderrolle auszuführen.

Die Steuerungseinheit innerhalb des Rollenkörpers ist einerseits vor Beschädigungen gut geschützt und ermöglicht eine direkte, bei der Fertigung der motorbetriebenen Förderrolle erfolgende Verbindung mit der Antriebseinheit, um diese anzusteuern. Die Steuerungseinheit ist zugleich in solcher Weise ausgebildet, dass sie von außerhalb des Rollenkörpers ein Zustandssignal empfängt. Dieses Zustandssignal kann beispielsweise ein Sensorsignal eines innerhalb der Fördervorrichtung, in der die motorbetriebene Förderrolle eingesetzt ist, angeordneten Sensors sein.

Die Steuerungseinheit ist weiterhin dazu ausgebildet, um ein Eigenzustandssignal zu erzeugen und aus dem Rollenkörper heraus zu senden. Diese Eigenzustandssignalverarbeitung ermöglicht eine Signalisierung des Betriebszustands der Förderrolle oder der den Betriebszustand bestimmenden Signalen nach außen, sodass andere in die Förderung eingebundene Komponenten ihr Steuerungsverhalten unter Verwendung dieser Eigenzustandssignale definieren können. Der Datenaustausch von Eigenzustandssignalen, bei dem ein Eigenzustandssignal der einen Rolle zu einem Zustandssignal der anderen Rolle werden kann, ermöglicht dadurch in einem Fördersystem eine autonome Steuerung der einzelnen Förderrollen mit vollständig umgesetzter Steuerungsintelligenz, ohne dass hierzu eine zentrale oder dezentrale Steuerungseinheit außerhalb der Förderrolle notwendig wäre.

Das Zustandssignal kann auch ein Signal sein, welches von einer benachbart zu der motorbetriebenen Förderrolle angeordneten Förderrolle stammt und den Betriebszustand dieser benachbarten Förderrolle signalisiert. So kann die Steuerungseinheit dazu ausgebildet sein, um als Zustandssignal ein Eigenzustandssignal der stromaufwärts oder stromabwärts gelegenen Förderrollen (oder beiden) zu empfangen: Dieses Eigenzustandssignal kann signalisieren, ob diese benachbarten motorbetriebenen Förderrollen angetrieben sind oder stillstehen.

Das Zustandssignal kann aber auch darüber hinausgehende logische Informationen enthalten, beispielsweise können von der benachbarten Förderrolle, also der stromaufwärts oder stromabwärts gelegenen Förderrolle oder beiden, als Zustandssignal Signale empfangen werden, welche von diesen benachbarten Förderrollen wiederum als Zustandssignal empfangen wurden, also beispielsweise Signale, die als Sensorsignal in eine dieser benachbarten Förderrollen zugeführt wurde und die die Steuerungseinheit dieser Förderrolle wiederum an die Steuerungseinheit der motorbetriebenen Förderrolle weitergibt.

Die Steuerungseinheit der motorbetriebenen Förderrolle kann dementsprechend insbesondere auch dazu ausgebildet sein, um ein Eigenzustandssignal, das einen Betriebszustand der Antriebseinheit charakterisiert und/oder das ein als Zustandssignal empfangenes Sensorsignal charakterisiert, zu generieren und aus dem Rollenkörper herauszusenden, sodass dieses Eigenzustandssignal an eine benachbarte motorbetriebene Förderrolle gesendet werden kann und von der dortigen Steuerungseinheit empfangen werden kann. Diese Übermittlung von Eigenzustandssignalen zwischen zwei benachbarten Rollen in beiden Richtungen, ist insbesondere vorteilhaft, wenn beide motorbetriebenen Förderrollen erfindungsgemäß aufgebaut sind und eine entsprechend ausgerüstete und ausgebildete Steuerungseinheit innerhalb des Rollenkörpers aufweisen. Auf diese Weise können die beiden benachbarten motorbetriebenen Förderrollen einen autonomen Ablauf des Fördervorgangs ohne die Notwendigkeit einer externen Steuerungseinheit außerhalb des Rollenkörpers mit entsprechend notwendiger Signalübermittlung zu und von dieser externen Steuerungseinheit ausführen.

Dabei ist erfindungsgemäß insbesondere bevorzugt vorgesehen, dass das Eigenzustandssignal und das Zustandssignal jeweils eine vorbestimmte Datenstruktur aufweisen und die Datenstruktur des Eigenzustandssignals und des Zustandssignals identisch ist. Dies ermöglicht es, dass mittels der motorbetriebenen Förderrolle eine Förderstrecke aufgebaut werden kann, die mehrere übereinstimmend ausgebildete motorbetriebene Förderrollen nach der Erfindung umfasst und diese motorbetriebenen Förderrollen solcher Art zur Signalübertragung miteinander gekoppelt sind, dass die jeweiligen innerhalb des Rollenkörpers angeordneten Steuerungseinheiten Zustandssignale in Form von aus anderen motorbetriebenen Förderrollen versendeten Eigenzustandssignalen empfangen und in Abhängigkeit von diesen empfangenen Eigenzustandssignalen der anderen motorbetriebenen Förderrollen ihre Antriebseinheit der eigenen motorbetriebenen Förderrolle ansteuern. Zugleich kann die Steuerungseinheit der motorbetriebenen Förderrolle ein Eigenzustandssignal generieren und versenden, welches den momentanen Betriebszustand der motorbetriebenen Förderrolle charakterisiert und auch sonstige, der Steuerungseinheit vorliegenden Informationen enthalten kann und dieses aus der motorbetriebenen Förderrolle von der Steuerungseinheit heraus gesendete Eigenzustandssignal wird von anderen in der Fördervorrichtung installierten motorbetriebenen Förderrollen als Zustandssignal empfangen und dient diesen dazu, die jeweils eigene Antriebseinheit anzusteuern.

Gemäß einer ersten bevorzugten Ausführungsform ist vorgesehen, dass das Achselement als Hohlachse ausgebildet ist und zur drehmomentfesten Befestigung in einem Förderrollengestell ausgebildet ist und dass eine Signalleitung durch die Hohlachse geführt ist, die mit der Steuerungseinheit zur Übertragung des Steuerungssignals verbunden ist. Gemäß dieser bevorzugten Ausführungsform dient das Achselement einerseits als mechanisches Wirkelement und kann zur Drehmomentabstützung der Antriebseinheit drehmomentfest in einem Förderrollengestell befestigt werden. Hierzu ist das Achselement vorzugsweise mit einer entsprechenden Außengeometrie versehen, die beispielsweise als Außenkonus ausgeführt sein kann, um einen entsprechenden Reibschluss zu einem Förderrollengestell auszubilden, alternativ oder zusätzlich sind durch Formschluss rotationssichernd wirkende Außengeometrien des Achselements denkbar, beispielsweise die Ausbildung als Mehrkantachse und andere Konstruktionsweisen nach Art von drehmomentübertragenden Flanschverbindungen. Das Achselement ist weiterhin als Hohlachse ausgebildet und ermöglicht hierdurch die Durchführung einer Signalleitung von außerhalb des Rollenkörpers in den Rollenkörper hinein. Hierdurch wird eine besonders gegenüber Beschädigungen unempfindliche Aufbauweise der Förderrolle ermöglicht, in dem lediglich eine Signalleitung in die Hohlachse von außen eingeführt werden muss und dann innerhalb der Hohlachse geschützt in den Rollenkörper und dort weiter zu der Steuerungseinheit geführt werden kann. Jegliche zusätzlichen Anschlussvorrichtungen außerhalb des Rollenkörpers können hierdurch vermieden werden, insbesondere können alle in den Rollenkörper hineinzuführenden Zustandssignale und alle von der Steuerungseinheit aus dem Rollenkörper herausgesendeten Zustandssignale über die Signalleitung, die in der Hohlachse geführt ist, übermittelt werden. Dies ermöglicht einen zugleich robusten und einfach zu montierenden und zu verkabelnden Aufbau einer Fördervorrichtung mit der erfindungsgemäßen Förderrolle.

Noch weiter ist es bevorzugt, dass zwischen der Steuerungseinheit und einem externen Anschluss einer Signalleitung, die mit der Steuerungseinheit zur Übertragung des Steuerungssignals verbunden ist, eine Drehlagerung des Achselements zum Rollenkörper angeordnet ist. Gemäß dieser Ausführungsform ist ein externer Anschluss einer Signalleitung vorgesehen. Zwischen diesem externen Anschluss und der innerhalb des Rollenkörpers angeordneten Steuerungseinheit ist eine Drehlagerung des Achselements zum Rollenkörper angeordnet. Diese Anordnung ist hierbei geometrisch zu verstehen, das heißt die Signalübertragung von dem Anschluss der Signalleitung zu der Steuerungseinheit wird geometrisch innerhalb des Achselementes durch diese Drehlagerung geführt. Typischerweise ist sowohl der externe Anschluss der Signalleitung als auch die Steuerungseinheit selbst ortsfest, das heißt nicht drehbar gelagert, der Rollenkörper dreht sich dementsprechend, durch die Drehlagerung geführt, um das Achselement und die Steuerungseinheit. Durch diesen Aufbau wird eine günstige Anordnung der Drehlagerung des Rollenkörpers mit einem für hohe Belastungen des Rollenkörpers ausreichenden Lagerungsabstand ermöglicht. Zugleich wird erreicht, dass die Steuerungseinheit günstig und geschützt innerhalb des Rollenkörpers platziert werden kann.

Erfindungsgemäß ist vorgesehen, dass die Steuerungseinheit ausgebildet ist, um als Zustandssignal ein Sensorsignal eines außerhalb des Rollenkörpers angeordneten Sensors, und/oder ein Eigenzustandssignal einer anderen motorbetriebenen Förderrolle zu empfangen und die Steuerungseinheit ausgebildet ist, um anhand dieses Sensorsignals und/oder dieses Eigenzustandssignals das Steuerungssignal zu generieren. Dementsprechend sind zwei Arten von Zustandssignalen vorgesehen und die Steuerungseinheit entsprechend hierfür ausgebildet. Zum einen kann das Zustandssignal ein Sensorsignal sein, das also einen Sensorwert eines Sensors beinhaltet, der außerhalb des Rollenkörpers angeordnet ist. Dieses Sensorsignal kann ein analoges oder ein digitales Signal sein und die Steuerungseinheit zur Verarbeitung eines entsprechend analogen oder digitalen Signals ausgebildet sein.

Beispielsweise kommt als Sensorsignal das Signal eines Lichtschrankensensors, das die Anwesenheit oder Abwesenheit eines Gegenstands in einem bestimmten Bereich oberhalb der Förderrolle signalisiert, in Betracht. Weiterhin können Sensorsignale vorgesehen sein, welche Positionen oder Stellungen von Einschleusern, Ausschleusern, Hebe-Senkanlagen oder dergleichen beinhalten, die im Bereich der Förderrolle, vor der Förderrolle oder hinter der Förderrolle in die Förderstrecke eingesetzt sind, in der die Förderrolle fördert. Das Zustandssignal kann auch ein Eigenzustandssignal einer anderen motorbetriebenen Förderrolle sein. In diesem Fall wird von der Steuerungseinheit ein Zustandssignal empfangen und verarbeitet, das als Eigenzustandssignal von einer anderen motorbetriebenen Förderrolle ausgegeben wird. Dieses Eigenzustandssignal wird in der Steuerungseinheit als Zustandssignal empfangen.

Das Eigenzustandssignal kann in diesem Fall beispielsweise Informationen darüber beinhalten, ob die andere Förderrolle in Bewegung ist oder nicht, das Eigenzustandssignal kann aber auch darüberhinaus gehende Informationen über die Bewegungsgeschwindigkeit der anderen Rolle, die Bewegungsdauer der anderen Förderrolle, die Beschleunigung oder Verzögerung der anderen Förderrolle beinhalten.

Das Eigenzustandssignal der anderen Förderrolle kann darüber hinaus auch Dateninhalte umfassen, welche als Zustandssignal in die andere Förderrolle gesendet wurden, also beispielsweise Sensorsignale eines außerhalb der anderen Förderrolle angeordneten Sensors, die der anderen Förderrolle als Zustandssignal zugeführt wurden.

Schließlich kann das Eigenzustandssignal der anderen motorbetriebenen Förderrolle auch Dateninhalte umfassen, welche der anderen motorbetriebenen Förderrolle zugeführte Eigenzustandssignale einer dritten motorbetriebenen Förderrolle enthalten. Auf diese Weise ist es möglich, durch signaltechnische Anbindung von zwei oder mehr Förderrollen durch die Übermittlung der Eigenzustandssignale in jeder der miteinander signaltechnisch gekoppelten motorbetriebenen Förderrollen die Eigenzustandssignale zumindest der direkt stromabwärts und gegebenenfalls der direkt stromaufwärts gelegenen motorbetriebenen Förderrolle zuzuführen und darüber hinaus auch die Möglichkeit gegeben, dass in jeder motorbetriebenen Förderrolle die Eigenzustandssignale aller anderen motorbetriebenen Förderrollen empfangen werden. Insbesondere kann diese Zuführung von Zustandssignalen in Form der mehreren Eigenzustandssignale und ebenso alternativ oder zusätzlich in Form von mehreren Sensorsignalen von mehreren außerhalb des Rollenkörpers angeordneten Sensoren mittels einer Bus-basierten signaltechnischen Kopplung der Förderrollen erfolgen. Hier kann durch entsprechende Adressierung und Kennzeichnung von Absendern von entsprechenden Datenpaketen, die ein Eigenzustandssignal darstellen, in zuverlässiger und hinsichtlich des Datenumfangs und der Übermittlungszeiten kompakter Weise die Datenübertragung zwischen den mehreren motorbetriebenen Förderrollen betrieben werden.

Noch weiter ist es bevorzugt, wenn die Steuerungseinheit ausgebildet ist, um als Zustandssignal ein digitales Signal zu empfangen und als Eigenzustandssignal ein digitales Signal zu versenden, wobei vorzugsweise das Zustandssignal eine für eine Bus-gestützte Kommunikation ausgebildete erste Datenstruktur mit einem ersten Adressdatenteil und einem ersten Inhaltsdatenteil aufweist und das Eigenzustandssignal eine für eine Bus-gestützte Kommunikation ausgebildete zweite Datenstruktur mit einem zweiten Adressdatenteil und einem zweiten Inhaltsdatenteil aufweist, wobei weiter vorzugsweise die erste Datenstruktur und die zweite Datenstruktur übereinstimmend sind. Demgemäß wird als Zustandssignal und Eigenzustandssignal jeweils ein digitales Signal verwendet. Insbesondere ist ein Bus-codiertes Signal vorgesehen, welches also eine Datenstruktur mit einem Adressdatenteil und einem Inhaltsdatenteil aufweist. Im Adressdatenteil kann dabei bevorzugt ein innerhalb des Bus-Datensystems vorgesehener Empfänger oder mehrere Empfänger codiert sein. Weiterhin kann im Adressdatenteil eine Absenderadresse codiert sein, welche charakterisiert, von welchem Teilnehmer im Bus-Datensystem das Zustandssignal oder Eigenzustandssignal versendet wurde.

So ist beispielsweise eindeutig ein bestimmter Sensor identifizierbar, wenn dieser ein Sensorsignal als Bus-codiertes Zustandssignal in das Bus-basierte Datensystem sendet. Ebenso kann eine bestimmte motorbetriebene Förderrolle, die ein Bus-codiertes Eigenzustandssignal in das Bus-basierte Datensystem sendet, anhand des Adressdatenteils identifiziert werden. Das Zustandssignal und das Eigenzustandssignal werden folglich als Datenpakete versendet und empfangen. Neben dem Adressdatenteil enthält ein solches Datenpaket dann auch einen Inhaltsdatenteil, in dem ein Zustandskennwert oder mehrere Zustandskennwerte enthalten sind. Ein solcher Zustandskennwert kann beispielsweise eine Antriebscharakteristik beschreiben. Wenn sowohl das Zustandssignal als auch das Eigenzustandssignal als Datenstruktur mit einer Bus-gestützten Kommunikation versendet und empfangen werden, ist es besonders bevorzugt, dass die Datenstruktur des Zustandssignals und die Datenstruktur des Eigenzustandssignals übereinstimmend sind. In diesem Fall können mit einem einzigen Bus-Protokoll, das alle Teilnehmer innerhalb einer Fördervorrichtung nutzen, die entsprechenden Eigenzustandssignale und die entsprechenden Zustandssignale innerhalb dieser Fördervorrichtung versendet und empfangen werden, sodass beispielsweise eine darin verbaute erfindungsgemäße motorbetriebene Förderrolle als Zustandssignal Sensorsignale oder Eigenzustandssignale von außerhalb des Rollenkörpers liegenden Sensoren und anderen motorbetriebenen Förderrollen empfangen und verarbeiten kann, ebenso wie diese motorbetriebene Förderrolle ihr Eigenzustandssignal an andere motorbetriebene Förderrollen oder sonstige, in dem Bus-basierten Datensystem angeschlossene Teilnehmer versenden kann und diese von diesen Teilnehmern empfangen werden können.

Gemäß einer weiteren bevorzugten Ausführungsform ist vorgesehen, dass die Antriebscharakteristik ausgewählt ist aus einem AN/AUS-Zustand der Antriebseinheit, einem Antriebsdrehmoment, einem Antriebsdrehmomentverlauf der Antriebseinheit, einer Geschwindigkeit der Antriebseinheit oder des Rollenkörpers, einem Geschwindigkeitsverlauf der Antriebseinheit oder des Rollenkörpers, einem Bremsdrehmoment der Antriebseinheit, oder einem Bremsdrehmomentverlauf der Antriebseinheit, oder einer Kombination von zwei oder mehr dieser Antriebscharakteristika. Gemäß dieser Fortbildungsform ist das Steuerungssignal, welches eine Steuerungseinheit zur Ansteuerung an die Antriebseinheit innerhalb des Rollenkörpers sendet und welches innerhalb des Eigenzustandssignals beschrieben ist, ausgewählt aus mehreren Betriebsparametern einer motorbetriebenen Förderrolle bzw. von deren Antriebseinheit. Die Antriebscharakteristik kann dabei auch mehrere dieser Betriebsparameter umfassen oder kann durch einen Betriebsparameter, der aus einer Verknüpfung von zwei solchen Betriebsparametern besteht, gebildet sein. Insbesondere umfasst die Antriebscharakteristik dabei Betriebsparameter, welche signalisieren, ob die Förderrolle bzw. die Antriebseinheit aktiviert ist oder nicht, also bewegt ist oder nicht und darüber hinaus sind in der Antriebscharakteristik Betriebsparameter umfassbar, welche das Antriebsverhalten charakterisieren, also beispielsweise Rotationsgeschwindigkeiten, Umdrehungen pro Minute, Drehmomente an der Antriebseinheit oder dem Rollenkörper, die jeweilige Ableitung nach der Zeit als den Verlauf charakterisierender Betriebsparameter. Von der Antriebscharakteristik umfasst können auch unveränderliche Eigenschaften der motorbetriebenen Förderrolle sein, beispielsweise eine Seriennummer, ein Übersetzungsverhältnis, eine Getriebeeigenschaft wie ein verbautes Kunststoffgetriebe oder Metallgetriebe, ein Rollenkörperaußendurchmesser und dergleichen. Schließlich können in der Antriebscharakteristik auch Betriebsparameter umfasst sein, welche Belastungen auf die motorbetriebene Förderrolle widerspiegeln, beispielsweise eine in der Förderrolle herrschende Temperatur, eine von der Förderrolle in einem zurückliegenden Zeitraum erfahrene Höchsttemperatur, eine Anzahl von Betriebsstunden der Förderrolle und weitere, in der Vergangenheit von der Förderrolle geleistete Maximalwerte bestimmter Betriebsparameterwie ein maximales Drehmoment, eine maximale Geschwindigkeit und dergleichen. Weiterhin können in der Antriebscharakteristik Steuerungsparameter umfasst sein, beispielsweise Programmierkennwerte, die wiedergeben, mit welchen Programmier-Parametern die motorbetriebene Förderrolle programmiert ist. So kann die Förderrolle beispielsweise als Antriebscharakteristik eine Beschreibung generieren, ob sie im Einzelplatzabzug oder im Blockabzug arbeitet und programmiert ist, mit welchen Geschwindigkeitsverlaufsrampen sie anfährt und abbremst, welche Maximalgeschwindigkeiten sie einsteuert und dergleichen.

Noch weiter ist bevorzugt, wenn die Steuerungseinheit eine Speichervorrichtung aufweist, in der eine Mehrzahl von Antriebscharakteristikverläufen gespeichert ist, wobei jedem Antriebscharakteristikverlauf eine individuelle binäre Codierung zugeordnet ist, und dass die Speichervorrichtung ausgebildet ist, um ein empfangenes digitales Signal mit den individuellen binären Codierungen zu vergleichen und die Antriebseinheit mit einem Antriebscharakteristikverlauf anzusteuern, dem eine individuelle Codierung zugeordnet ist, die dem empfangenen digitalen Signal entspricht.

Gemäß dieser Ausführungsform weist die Steuerungseinheit eine elektronische Speichervorrichtung auf und diese Speichervorrichtung speichert eine oder eine Mehrzahl von Antriebscharakteristikverläufen. Diese Antriebscharakteristikverläufe beschreiben ein bestimmtes Antriebsverhalten der motorbetriebenen Förderrolle, beispielsweise eine Beschleunigung oder ein Abbremsen, eine Maximalgeschwindigkeit und können folglich allgemein den Verlauf der Geschwindigkeit der motorbetriebenen Förderrolle über die Zeit beschreiben. Als Antriebscharakteristikverlauf ist aber auch ein Logikverhalten der motorbetriebenen Förderrolle zu verstehen, welches beispielsweise eine bestimmte Antriebscharakteristik in Abhängigkeit von äußeren Zustandssignalen stellt, folglich also eine logische Programmierung der motorbetriebenen Förderrolle wiedergibt. So kann beispielsweise eine Programmierung zum Betrieb der motorbetriebenen Förderrolle im Einzelplatzabzug oder im Blockabzug als ein Antriebscharakteristikverlauf gespeichert sein. Grundsätzlich können in der Speichervorrichtung mehrere Antriebscharakteristikverläufe gespeichert sein, um durch entsprechenden Abruf mittels eines digitalen Signals ausgewählt zu werden und dann einer von diesen Antriebscharakteristikverläufen für den Betrieb der motorbetriebenen Förderrolle herangezogen wird. Die Speichervorrichtung kann aber auch so ausgebildet sein, dass im Rahmen einer Programmierung ein einziger Antriebscharakteristikverlauf dort gespeichert wird und dieser einzige Antriebscharakteristikverlauf für den Betrieb der motorbetriebenen Förderrolle verwendet wird.

Gemäß einer weiteren bevorzugten Ausführungsform ist vorgesehen, dass die Antriebseinheit einen bürstenlosen Elektromotor umfasst und die Steuerungseinheit eine Kommutierungselektronik zur Ansteuerung des Elektromotors umfasst. Grundsätzlich ist es folglich bevorzugt, dass die Steuerungseinheit auch zur elektronischen Kommutierung des Elektromotors in der Antriebseinheit ausgebildet ist. Hierdurch wird vermieden, dass eine außerhalb der motorbetriebenen Förderrolle liegende elektronische Kommutierung erfolgt und eine entsprechende große Anzahl an differenzierten Signalen über differenzierte Signalleitungen in den Rollenkörper hineingeführt werden muss. Stattdessen kann die räumlich häufig begrenzte Einführung von Signalen in den Rollenkörper über wenige Signalleitungen erfolgen und daher entsprechend robust und kompakt ausgebildet werden.

Gemäß einem weiteren Aspekt der Erfindung oder einer Fortbildung der erfindungsgemäßen Förderrolle ist vorgesehen, dass die Steuerungseinheit einen elektronischen Speicher umfasst und ausgebildet ist, um Programmierungsdaten zu empfangen. Die Programmierungsdaten in dem elektronischen Speicher abzuspeichern, und um in Abhängigkeit der Programmierungsdaten das Steuerungssignal zu generieren.

Gemäß dieser Fortbildungsform ist die motorbetriebene Förderrolle durch ihre Steuerungseinheit dazu ausgebildet, um für unterschiedliche Förderabläufe programmiert zu werden. Zu diesem Zweck ist ein elektronischer Speicher Bestandteil der Steuerungseinheit und dieser elektronische Speicher ist dazu ausgelegt, um Programmierungsdaten zu empfangen und abzuspeichern. Diese Programmierungsdaten beschreiben einen logischen Zusammenhang zwischen empfangenen Zustandssignalen und den Regeln, mit denen daraus ein Steuerungssignal für die Antriebseinheit generiert wird. Die motorbetriebene Förderrolle kann hierdurch für unterschiedliche logische Zusammenhänge zwischen solchen Zustandssignalen und Steuerungssignalen programmiert werden und ist daher in einer Vielzahl unterschiedlicher Varianten einsetzbar. Die Programmierungsdaten können dabei als einzige Programmierung, die auch für den Betrieb der Rolle verwendet wird, in dem elektronischen Speicher abgelegt sein. Alternativ können in dem elektronischen Speicher auch mehrere unterschiedliche Programmierungsdaten für unterschiedliche Betriebsweisen der Förderrolle abgelegt sein und durch eine entsprechende Kennung, die durch Programmierung der Steuerungseinheit gesetzt wird, genau eine von diesen abgespeicherten Programmierungsdaten für den Betrieb verwendet werden. Dies eröffnet die Möglichkeit, dass durch eine Übertragung eines anderen Kennungswertes mit einer geringen Datenübertragungsmenge andere Programmierungsdaten ausgewählt werden und für den Betrieb der Förderrolle verwendet werden.

Die zum Empfangen und zur Speicherung von Programmierungsdaten fortgebildete Förderrolle kann weiterhin fortgebildet werden indem die Steuerungseinheit ausgebildet ist, um in Abhängigkeit der Programmierungsdaten zwischen einem ersten Steuerungssignal für einen ersten Steuerungsablauf, welcher einem Einzelplatzabzugsmodus entspricht, in dem in Abhängigkeit eines Zustandssignals, das einen freien Zielraum signalisiert, ein Steuerungssignal generiert wird, das eine die Antriebseinheit aktivierende Antriebscharakteristik darstellt, und einem zweiten Steuerungssignal für einen zweiten Steuerungsablauf, welcher einem Blockabzugsmodus entspricht, in dem in Abhängigkeit eines Zustandssignals, das die Aktivierung einer Antriebseinheit einer benachbarten, motorbetriebenen Förderrolle signalisiert, ein Steuerungssignal generiert wird, das eine die Antriebseinheit aktivierende Antriebscharakteristik darstellt, umzuschalten. Gemäß dieser Fortbildungsform ist die Förderrolle dazu ausgebildet, um zwischen zumindest zwei Steuerungsabläufen umzuschalten, d. h. um durch einen entsprechenden Programmierbefehl entweder den einen Steuerungsablauf in Gestalt des Einzelplatzabzugsbetriebsablaufs oder den anderen Steuerungsablauf in Gestalt des Blockabzugsbetriebsablaufs auszuführen. Dabei ist der Einzelplatzabzug dadurch charakterisiert, dass die Förderrolle in der Förderrichtung in eine stromabwärts gelegene Förderzone immer dann fördert, also angetrieben ist, wenn diese stromabwärts gelegene, benachbarte Förderzone nicht belegt ist. Ein simultaner Betrieb der benachbarten, stromabwärts gelegenen Förderzone ist daher nicht erforderlich, kann aber unterstützend zur Förderung des Gegenstands erfolgen. Beim Blockabzugsmodus hingegen werden einander benachbarte Förderzonen simultan betrieben und können auch jeweils mit Gegenständen belegt sein. In diesem Fall erfolgt die Förderung der Gegenstände gleichzeitig, das heißt, der die stromabwärts gelegene, benachbarte Förderzone belegende Gegenstand wird herausgefördert und gleichzeitig wird von der im Blockabzugsmodus arbeitenden Förderrolle ein Gegenstand in diese freiwerdende Förderzone hineingefördert.

Grundsätzlich können Einzelplatzabzug und Blockabzug mit unterschiedlichen Zustandssignalen und Eigenzustandssignalen gesteuert werden. Grundsätzlich ist es aber möglich, den Einzelplatzabzug mit einem Zustandssignal anzusteuern, welcher signalisiert, dass die stromabwärts gelegene, benachbarte Förderzone frei ist. Der Blockabzugsmodus kann demgegenüber mit einem Zustandssignal gesteuert werden, welches als Eigenzustandssignal der Förderrolle in der stromabwärts oder stromaufwärts gelegenen Förderzone generiert wird und den Betrieb in dieser einen oder anderen (oder beiden) Förderrollen signalisiert. Grundsätzlich können weitere Zustandssignale oder Eigenzustandssignale in die Steuerung einbezogen werden, beispielsweise ein Zustandssignal, welches signalisiert, dass die Förderzone, in der die Förderrolle selbst angeordnet ist, mit einem Gegenstand belegt ist oder Eigenzustandssignale benachbarter Förderrollen, welche Anlauframpen, Geschwindigkeiten und dergleichen charakterisieren.

Der Steuerungsmodus nach Einzelplatzabzug und der Steuerungsablauf nach Blockabzug können hierbei in dem Speicher vorgespeichert sein und durch entsprechenden Programmierbefehl der Steuerung zugrunde gelegt werden. Ebenso können die im Einzelplatzabzug bzw. Blockabzug hinterlegten Steuerungsabläufe auch durch Programmieranweisungen bei der Programmierung selbst in die Förderrolle gesendet werden und im Speicher abgespeichert werden, so dass eine Vorbelegung des Speichers mit diesen Steuerungsabläufen nicht notwendig ist. Neben dem Einzelplatzabzug und dem Blockabzug können auch weitere, hiervon verschiedene Steuerungsabläufe programmierbar sein oder vorgespeichert sein.

Sowohl der Einzelplatzabzug als auch der Blockabzug verwirklichen hierbei eine sogenannte staudrucklose Förderung (zero pressure accumulation) bei der die Steuerung der Förderrolle solcherart ausgeführt wird, dass ein geförderter Gegenstand nicht in Kontakt mit einem anderen, in der Förderstrecke befindlichen Gegenstand kommt.

Dies sichert eine beschädigungsfreie Förderung der Gegenstände auch bei langen Förderstrecken und einer potenziell hohen Staudruckkraft bei Kontakt mehrerer Gegenstände.

Noch weiter ist dabei bevorzugt, wenn die Steuerungseinheit einen elektronischen Speicher umfasst und ausgebildet ist, um ein Programmiersignal zu empfangen und um auf Grundlage und in Abhängigkeit der Programmieranweisung eine logische, insbesondere durch einen Algorithmus beschriebene Abhängigkeit zwischen einem Zustandssignal und einer Antriebscharakteristik, eine logische, insbesondere durch einen Algorithmus beschriebene Abhängigkeit zwischen einem Zustandssignal und einem Antriebscharakteristikverlauf, oder einen Antriebscharakteristikverlauf in dem elektronischen Speicher abzuspeichern, wobei die Programmieranweisung vorzugsweise digital, insbesondere eine Bus-codierte Programmieranweisung ist. Gemäß dieser Ausführungsform wird ein von der Steuerungseinheit empfangenes Programmiersignal, das durch eine Steuerungsablaufszuordnung oder durch eine Programmierbefehlfolge charakterisiert sein kann, ein entsprechender Steuerungsablauf für die Förderrolle implementiert. Diese Implementierung kann durch konkrete Programmierung anhand der Programmierbefehlfolge stattfinden oder kann erfolgen, indem aufgrund der Steuerungsablaufzuweisung ein vorprogrammierter, in dem Speicher abgespeicherter Steuerungsablauf aufgerufen und zugeordnet wird. Der Steuerungsablauf selbst kann durch eine logische Abhängigkeit zwischen einem Zustandssignal und einer Antriebscharakteristik gebildet sein, hierbei sind natürlich auch weitergehende Abhängigkeiten zwischen zusätzlichen Zustandssignalen und zusätzlichen Antriebscharakteristika als abzuspeichernder Steuerungsablauf denkbar. Ebenso können entsprechende Verläufe von Antriebscharakteristiken logisch in Abhängigkeit zu einem Zustandssignal oder auch einen Zustandssignalverlauf abgespeichert und der Steuerung zugrunde gelegt werden. Schließlich kann ein Programmiersignal auch dazu dienen um nur einen Antriebscharakteristikverlauf abzuspeichern, der dann durch entsprechende logische Verknüpfungen für einen Steuerungsablauf der Förderrolle eingesetzt wird, beispielsweise also durch weitere logische Abhängigkeiten in eine Steuerungsfolge in Abhängigkeit von Zustandssignalen gesetzt wird.

Besonders bevorzugt ist es hierbei, wenn die Programmieranweisung Bus-codiert ist. Dies ermöglicht es einerseits, die Programmieranweisung an eine Busleitung zu versenden, andererseits wird hierdurch die gezielte Programmierung bestimmter Förderrollen, die an die Busleitung angeschlossen sind, durchgeführt.

Noch weiter ist es bevorzugt, wenn die Steuerungseinheit ausgebildet ist, um in einem Analogbetriebsmodus ein analoges Steuerungssignal zu empfangen und in Abhängigkeit des analogen Steuerungssignals die Antriebseinheit anzusteuern, bei Empfang eines vorbestimmten analogen Steuerungssignals in einen Digitalbetriebsmodus zu wechseln, im Digitalbetriebsmodus digitale Steuerungsdaten zu empfangen und als Steuerungssignal oder Programmiersignal zu verarbeiten, wobei die digitalen Steuerungsdaten vorzugsweise Bus-codierte Steuerungsdaten sind. Gemäß dieser Ausführungsform ist die Förderrolle ausgebildet, um in einem analogen Betriebsmodus durch analoge Eingangssignale gesteuert zu werden. Solch analoge Eingangssignale können beispielsweise in Abhängigkeit einer Analog-Eingangssignalspannung die Geschwindigkeit der Förderrolle direkt als Antriebscharakteristik steuern. Diese Eigenschaft der erfindungsgemäßen Förderrolle macht es möglich, dass die Förderrolle abwärts kompatibel ist, um sie in existierende Förderstrecken als Bauteil einzufügen und hierdurch in bestehenden analogen Steuerungskreisen zu arbeiten. Zugleich wird durch diese Fortbildung aber ermöglicht, dass die analogbetriebene Förderrolle zusätzliche intelligente Funktionen dem Benutzer bereitstellt. Hierzu kann die Förderrolle gemäß dieser Fortbildung in einen Digital-Betriebsmodus umgeschaltet werden. Diese Umschaltung kann aus dem analogen Betriebsmodus heraus erfolgen, indem die Förderrolle die empfangenen Analogsignale nicht nur für die analoge Steuerung verwendet, sondern zugleich auch in logischer Weise auswertet und hierbei eine bestimmte Signalabfolge des analogen Signals oder einen bestimmten Signalwert oder dergleichen als Kennung interpretiert, die das Umschalten aus dem Analogmodus in den Digital-Betriebsmodus veranlasst. Dieses Umschaltsignal kann beispielsweise ein im regulären analogen Betriebsmodus nicht auftretendes mehrfaches Schalten eines Förderrichtungswechsels in kurzer Folge sein, oder es kann ein Spannungswert des Analogsignals sein, der im normalen Betriebsmodus nicht verwendet wird.

Insbesondere wird es mit dieser Fortbildung möglich, im Digital-Betriebsmodus zusätzliche Zustandssignale zu empfangen und zu verarbeiten, Eigenzustandssignale zu generieren und herauszugeben oder Programmiersignale zu empfangen und zu einer Umprogrammierung der Förderrolle zu verarbeiten. Die Förderrolle wird hierdurch in die Lage versetzt, in dem Digital-Betriebsmodus die zuvor erläuterten Funktionen auszuführen. Zugleich ist die Förderrolle aber auch für einen analogen Betriebsmodus ausgebildet.

Erfindungsgemäß kann die erfindungsgemäße Förderrolle in einer Förderrollenanordnung mit zwei Förderrollen mit jeweils einer Steuerungseinheit nach der zuvor erläuterten Förderrolle mit Steuerungseinheit ausgebildet werden. Bei dieser Ausgestaltung der Erfindung ist es bevorzugt, dass die erste und die zweite Steuerungseinheit mittels einer digitalen Signalleitung miteinander verbunden sind und die erste Steuerungseinheit der ersten Förderrolle ausgebildet ist, um digitale erste Eigenzustandsdaten der zweiten Steuerungseinheit zuzusenden, und digitale zweite Eigenzustandsdaten von der zweiten Steuerungseinheit zu empfangen und um die Antriebseinheit der ersten Förderrolle in Abhängigkeit der von der zweiten Förderrolle empfangenen zweiten Eigenzustandsdaten anzusteuern, wobei die ersten und zweiten Eigenzustandsdaten vorzugsweise Bus-codierte Daten sind. Diese Förderrollenanordnung verwirklicht den Austausch von in der einen Förderrolle generierten Eigenzustandsdaten mit der anderen Förderrolle, welche diese von der einen Förderrolle generierten Eigenzustandsdaten als Zustandsdaten empfängt und verarbeitet, um hieraus eine Antriebscharakteristik für die Antriebseinheit der anderen Förderrolle zu generieren und die Antriebseinheit hiermit anzusteuern. Die beiden Förderrollen können hierdurch in einer steuerungstechnisch voneinander abhängigen Weise ihre Förderabläufe ansteuern und hierdurch einen Förderablauf mit hoher Varianz und Steuerungsintelligenz durchführen. Dabei ist zu verstehen, dass Eigenzustandsdaten, die von der einen zu der anderen Förderrolle gesendet und dort empfangen werden, auch Zustandsdaten sein können, welche in der einen Förderrolle empfangen werden und dann als Eigenzustandsdaten von dieser Förderrolle an die andere Förderrolle weitergeleitet werden. So ist es beispielsweise möglich, dass die eine Förderrolle Zustandsdaten eines Sensors empfängt und diese Zustandsdaten in Form der Sensorsignale als Eigenzustandsdaten an die andere Förderrolle weiterleitet. Grundsätzlich ist es bei der Förderrollenanordnung bevorzugt, wenn die beiden Förderrollen mittels einer Bus-Leitung miteinander verbunden sind und die Eigenzustandsdaten als Bus-codierte Daten versendet und empfangen werden. Dies ermöglicht es, das Prinzip der Förderrollenanordnung mit den zumindest zwei Förderrollen auf eine gesamte Fördervorrichtung anzuwenden und eine Vielzahl von Förderrollen mittels der Bus-Leitung miteinander zu verbinden und zwischen dieser Vielzahl von Förderrollen entsprechende Bus-codierte Daten auszutauschen.

Noch weiter ist es bevorzugt, wenn die eine Förderrolle angeordnet ist zum Fördern eines Förderguts in einer ersten Förderzone und die andere Förderrolle angeordnet ist zum Fördern eines Förderguts in einer zweiten Förderzone und dass die ersten und zweiten Eigenzustandsdaten Informationen über die Anwesenheit eines Förderguts in der ersten Förderzone oder über die Anwesenheit eines Förderguts in der zweiten Förderzone enthalten. Gemäß dieser Ausbildung werden als Eigenzustandsdaten solche Informationen ausgetauscht, welche eine Belegungseigenschaft von Förderzonen charakterisieren. Dies kann beispielsweise solcherart erfolgen, dass jede Förderrolle derart ausgebildet ist, dass sie durch Verarbeitung eigener Daten oder in dem Rollenkörper integrierter Sensoren eine Anwesenheit eines Förderguts detektiert und als Eigenzustandssignal versendet oder dass eine Förderrolle eine signaltechnische Verbindung mit einem Sensor hat, der als Zustandssignal eine Anwesenheit eines Förderguts in derjenigen Förderzone, in der diese Förderrolle angeordnet ist, signalisiert und dieses vom Sensor als Eigenzustandssignal von der Förderrolle versendet wird.

Schließlich ist gemäß einer weiteren bevorzugten Ausführungsform vorgesehen, dass die Eigenzustandsdaten ausgewählt sind aus: Eigenzustandsdaten, welche einen Antriebszustand der Antriebseinheit der Förderrolle beschreiben, Eigenzustandsdaten, welche ein Sensorsignal eines an die Förderrolle angeschlossenen Sensors beschreiben, Eigenzustandsdaten, welche einen Steuerbefehl für die Antriebseinheit der Förderrolle beschreiben. Gemäß dieser Fortbildungsform ist die Steuerungseinheit der Förderrolle ausgebildet, um Eigenzustandsdaten zu versenden, welche einen Antriebszustand der Antriebseinheit, ein Sensorsignal eines angeschlossenen Sensors oder einen Steuerbefehl für die Antriebseinheit umfassen, oder zu empfangen. Diese Möglichkeiten der Versendung bzw. des Empfangens von bestimmten Eigenzustandsdaten stellt eine Grundlage für die Steuerung von bestimmten Steuerungsabläufen wie dem Einzelplatzabzug und dem Blockabzug dar und kann für eine Vielzahl von Steuerungsabläufen eingesetzt werden. Dabei können sowohl von außerhalb des Rollenkörpers in die Förderrolle gesendete Daten als Eigenzustandsdaten versendet und empfangen werden als auch in dem Rollenkörper selbst generierte oder vorhandene Daten als solche Eigenzustandsdaten gesendet und empfangen werden.

Eine bevorzugte Ausführungsform wird anhand der beiliegenden Figuren erläutert. Es zeigen:
- Figur 1: eine längsgeschnittene Ansicht einer erfindungsgemäßen motorbetriebenen Förderrolle,
- Figur 2: eine perspektivische Seitenansicht einer Förderstrecke mit mehreren Förderzonen, in denen jeweils eine erfindungsgemäße motorbetriebene Förderrolle montiert ist, und
- Figur 3: ein schematisches Ablaufdiagramm der übermittelten Daten innerhalb und außerhalb von drei motorbetriebenen Förderrollen, die in einer Förderstrecke in einer benachbarten Weise zueinander montiert sind.

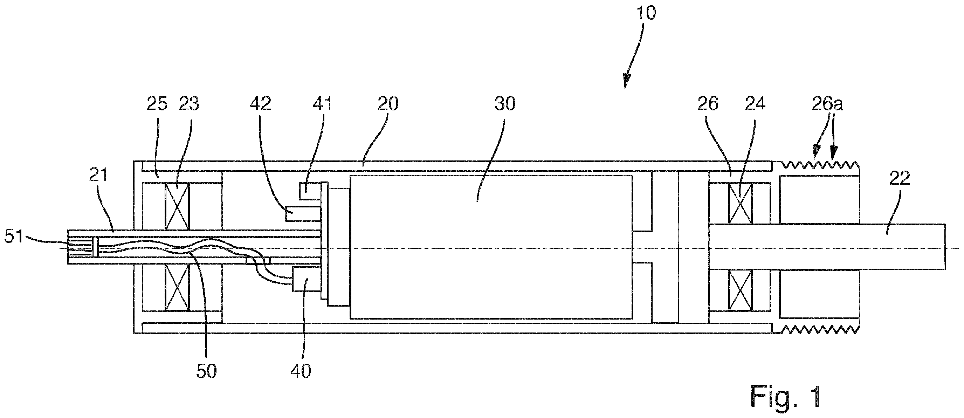

Bezugnehmend zunächst auf Figur 1 ist eine motorbetriebene Förderrolle 10 gezeigt, die einen Rollenkörper 20 aufweist, aus dem jeweils endseitig ein erster Achsstummel 21 und ein zweiter Achsstummel 22 herausragt. Die motorbetriebene Förderrolle kann mittels dieser Achsstummel in einem Rahmen montiert werden, der sich entlang einer Förderstrecke erstreckt. Hierbei werden die beiden Achsstummel drehmomentfest in dem Rahmen montiert. Der Rollenkörper 20 ist drehbar um diese Achsstummel gelagert.

Diese drehbare Lagerung ist verwirklicht durch ein erstes Wälzlager 23, das in einer am ersten Ende des Rollenkörpers eingesetzten Endkappe 25 befestigt ist und den ersten Rollenkörper 20 drehbar auf dem ersten Achsstummel 21 lagert. Weiterhin ist am zweiten Ende des Rollenkörpers eine Endkappe 26 eingesetzt, in der ein zweites Wälzlager 24 montiert ist, welches den Rollenkörper drehbar auf dem zweiten Achsstummel 22 lagert. Die zweite Endkappe 26 weist dabei zusätzlich einstückig eine aus dem Rollenkörper axial vorstehende Umfangsfläche auf, die durch mehrere umlaufende Nuten 26a einen Abtrieb eines Drehmoments mittels Keilrippenriemen auf andere, benachbart liegende Förderrollen ermöglicht, die über keinen eigenen Motorantrieb verfügen. Hierdurch kann die motorbetriebene Förderrolle in einer Förderzone mit mehreren passiv angetriebenen Rollen eingesetzt werden und dient zum Antrieb dieser passiv angetriebenen Förderrollen in der Förderzone.

Im Innenraum des Rollenkörpers 20 ist weiterhin eine Antriebseinheit 30 angeordnet, die ein Drehmoment zwischen einem der beiden oder beiden Achsstummeln und dem Rollenkörper erzeugen kann. Die Antriebseinheit kann einen Elektromotor umfassen, der direkt das Drehmoment erzeugt und folglich mit dem Stator mit einem oder beiden Achsstummeln drehmomentfest gekoppelt ist und mit dem Rotor mit dem Rollenkörper drehmomentfest gekoppelt ist. Die Antriebseinheit kann weiterhin auch ein Getriebe umfassen, um die Rotationsgeschwindigkeit des Elektromotors zu untersetzen und dessen Drehmoment zu erhöhen. So können beispielsweise Planetenradgetriebe oder Stirnradgetriebe zum Einsatz kommen und in die Drehmomentübertragungskette zwischen dem Achsstummel oder den Achsstummeln und dem Rollenkörper mit dem Elektromotor gemeinsam eingesetzt sein.

Die Antriebseinheit 30 wird durch eine innerhalb des Rollenkörpers angeordnete Steuerungseinheit 40 angesteuert. Diese Steuerungseinheit 40 kann einerseits im Falle eines bürstenlosen Elektromotors eine Kommutierungselektronik aufweisen. Insbesondere ist die Steuerungseinheit 40 aber dazu ausgebildet, um logische Steuerungsentscheidungen auf Grundlage von empfangenen Zustandsdaten zu treffen, die von außerhalb des Rollenkörpers empfangen werden.

Zu diesem Zweck ist die Steuerungseinheit 40 mittels einer Busleitung 50 mit einem oder mehreren Signalsendern verbunden, die außerhalb des Rollenkörpers angeordnet sind. Die Busleitung 50 ist hierzu durch den linksseitigen Achsstummel 21 hindurchgeführt, der als Hohlachse ausgeführt ist. In dem äußeren Ende des Achsstummels 21 ist eine entsprechende Steckerverbindung 51 ausgebildet, welche die Busleitung 50 an eine außerhalb des Rollenkörpers und Achsstummels verlaufende Busleitung anschließen kann. Dieser Anschluss kann durch eine abgedichtete Steckerverbindung verwirklicht werden. Diese Steckerverbindung 51 stellt einerseits den Anschluss an eine Signalbusleitung her, welche zur Übertragung von Zustandssignalen zwischen mehreren motorbetriebenen Förderrollen und Sensoren dient. Weiterhin stellt die Steckerverbindung den Anschluss an eine Energieleitung her, welche eine elektrische Energieübertragung für die Antriebseinheit bereitstellt.

Die Steuerungseinheit 40 umfasst einerseits einen elektronischen Speicher 41. In dem elektronischen Speicher 41 können einerseits unveränderliche Kennwerte der motorbetriebenen Förderrolle, wie deren Seriennummer oder die Untersetzung deren Getriebes gespeichert sein und für eine Datenübertragung nach außerhalb des Rollenkörpers dienen. Weiterhin können im elektronischen Speicher veränderliche Betriebsparameter der motorbetriebenen Förderrolle abgespeichert sein, wie deren Betriebsstundenzahl, Kennwerte zur Charakterisierung von Betriebstemperaturen wie erreichte Maximaltemperatur, ebenso Kennwerte zur Charakterisierung von Rotationsgeschwindigkeiten, Drehmomenten und dergleichen. Diese veränderlichen Betriebsparameter können ebenfalls dazu dienen, aus dem Rollenkörper herausgesendet zu werden, um einem außerhalb des Rollenkörpers liegenden Signalempfänger Kenndaten über die motorbetriebene Förderrolle zu übermitteln.

Weiterhin können im elektronischen Speicher 41 ein oder mehrere Steuerungsabläufe abgespeichert sein, nach denen die Steuerungseinheit die Antriebseinheit 30 ansteuert in Abhängigkeit und nach logischer Verknüpfung von Zustandsdaten, die von außerhalb des Rollenkörpers empfangen werden. So kann beispielsweise ein Steuerungsablauf für einen Einzelplatzabzug abgespeichert sein, ein Steuerungsablauf für einen Blockabzug abspeichert sein oder es können diese beiden Arten von Steuerungsabläufen mit unterschiedlichen Fördergeschwindigkeiten, Beschleunigungsrampen und dergleichen abgespeichert sein. Diese unterschiedlichen Steuerungsabläufe sind entweder von außen durch entsprechende Datenzufuhr in die Steuerungseinheit 40 programmierbar und die Steuerungseinheit entsprechend für eine Programmierung ausgebildet. Alternativ können die Steuerungsabläufe auch in dem elektronischen Speicher 41 abgespeichert sein und durch einen Empfang eines entsprechenden Aufrufbefehls aus dem elektronischen Speicher 41 durch die Steuerungseinheit ausgelesen und dann für die Steuerungsabläufe der Antriebseinheit verwendet werden. In diesem Fall ist jedem Steuerungsablauf ein entsprechender Aufrufbefehl zugeordnet und die Steuerungseinheit ausgebildet, um einen entsprechenden Vergleich anzustellen.

Weiterhin sind innerhalb des Rollenkörpers 20 ein oder mehrere Temperatursensoren 42 angeordnet, welche ausgebildet sind, um die in dem Rollenkörper vorherrschende Temperatur zu erfassen und an die Steuerungseinheit zu signalisieren. Diese Temperatursensoren dienen dazu, eine Überlastung der Rolle zu detektieren und der Steuerungseinheit eine entsprechend logische Reaktion mit Ausgabe entsprechender Steuerungssignale an die Antriebseinheit, auf Grundlage von Temperaturdaten zu ermöglichen.

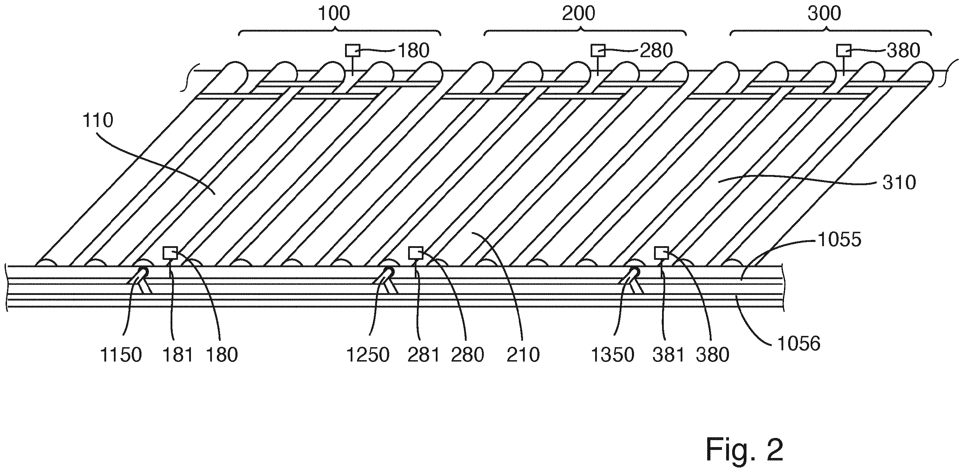

Figur 2 zeigt eine Förderstrecke mit drei Förderzonen 100, 200, 300. Die Förderzone 100 ist der mittleren Förderzone 200 stromaufwärts angeordnet und die Förderzone 300 ist zu der mittleren Förderzone 200 stromabwärts angeordnet, die Förderrichtung ist demgemäß von links nach rechts. Jede Förderzone umfasst jeweils eine motorbetriebene Förderrolle 110, 210, 310, welche jeweils mittels Keilrippenriemen benachbarte, passiv angetriebene Förderrollen in der jeweiligen Förderzone antreiben. Durch Ansteuerung einer einzelnen motorbetriebenen Förderrolle 110, 210, 310, können daher die insgesamt jeweils fünf Förderrollen in der jeweiligen Förderzone insgesamt in Rotation versetzt werden.

Weiterhin ist in jeder Förderzone ein Lichtschrankensensor 180, 280, 380 angeordnet, welcher das Vorhandensein eines zu fördernden Gegenstands in der jeweiligen Förderzone detektieren kann.

Die motorbetriebenen Förderrollen 110, 210, 310 sind mittels einer Signalbusleitung 1055 miteinander verbunden und hierdurch in der Lage, Daten miteinander auszutauschen. Über die Signalbusleitung 1055 können demnach Eigenzustandsdaten, die von einer der motorbetriebenen Förderrollen generiert werden, aus dem Rollenkörper dieser jeweiligen Förderrolle in die Busleitung 1055 eingespeist werden und von den anderen motorbetriebenen Förderrollen als Zustandsdaten aus der Signalbusleitung 1055 heraus empfangen werden. Jede motorbetriebene Förderrolle ist mit ihrer jeweiligen durch den Achsstummel hindurchgeführten Busanschlussleitung mit Stecker 1150, 1250, 1350 mittels einer am äußeren Ende des Achsstummels angeordneten Steckerverbindung mit der Signalbusleitung 1055 verbunden.

Weiterhin ist eine Energieleitung 1056 entlang der motorbetriebenen Förderrollen verlegt und jede der motorbetriebenen Förderrollen ist mit dieser Energieleitung verbunden. Die Energieleitung 1056 dient der Einspeisung von elektrischer Energie in jede der motorbetriebenen Förderrollen. Sie ist ebenfalls über die Steckerverbindung 1150, 1250, 1350 am äußeren Ende des Achsstummels mit dem Innenraum des Rollenkörpers verbunden und kann elektrische Energie zu der Antriebseinheit in dem jeweiligen Rollenkörper leiten. Diese Zuleitung wird hierbei über die innerhalb des Rollenkörpers angeordnete Steuerungseinheit der jeweiligen Motorrolle gesteuert.

Die jeweils einer Förderzone zugeordneten Lichtschrankensensoren 180, 280, 380 sind mittels einer elektrischen Konnektierung 181, 281, 381 ebenfalls mit der Signalbusleitung 1055 verbunden und beziehen die für ihren Betrieb notwendige elektrische Energie aus dieser Signalbusleitung. Die Sensoren sind hierbei ausgebildet, um unmittelbar Bus-codierte Sensorsignale in die Signalbusleitung 1055 einzuspeisen. Diese Sensorsignale können von jeder der motorbetriebenen Förderrollen als Zustandssignale empfangen und zur Steuerung der Antriebseinheit verarbeitet werden.

Die motorbetriebenen Förderrollen empfangen demnach einerseits über die Signalbusleitung 1055 Zustandsdaten, welche beispielsweise solche Sensordaten sein können. Andererseits generieren die Steuerungseinheiten innerhalb der motorbetriebenen Förderrollen auch Eigenzustandssignale, welche beispielsweise Informationen darüber enthalten, ob die motorbetriebene Förderrolle sich dreht oder sich nicht dreht, angetrieben ist, oder nicht angetrieben ist, weitergehende Informationen überdie Bewegungsform, wie beispielsweise die Rotationsgeschwindigkeit, Drehmomentinformationen, Motorstrominformationen und dergleichen. Diese generierten Eigenzustandssignale werden von der Steuerungseinheit in die Signalbusleitung 1055 eingespeist und können von anderen motorbetriebenen Förderrollen als Zustandsdaten aus der Signalbusleitung 1055 empfangen werden. Jede der Steuerungseinheiten ist daher in der Lage, die Steuerungsbefehle für die Antriebseinheit innerhalb der Motorrolle in Abhängigkeit der so empfangenen Zustandssignale zu generieren.

Grundsätzlich ist zu verstehen, dass an die Signalbusleitung angeschlossene Sensoren und Förderrollen und auch sonstige im Fördersystem verbaute Aktoren in die Signalbusleitung Bus-codierte Signale einspeisen. Solche Bus-codierten Signale sind insbesondere durch einen Adressdatenblock charakterisiert, der die Signale nach ihrer Herkunft als Absenderadresse charakterisieren kann, nach ihrem Zielort als Empfängeradresse charakterisieren kann oder beides. Dementsprechend können in der Signalbusleitung 1055 versendete Bus-Signaldaten von jedem an die Signalbusleitung 1055 angeschlossenen Empfänger anhand des Adressdatenteils nach ihrer Herkunft oder ihrem Bestimmungsort oder beidem identifiziert werden. Die in den Bus-codierten Daten enthaltenen Informationen sind dann in einem neben dem Adressdatenteil versendeten Signaldatenteil enthalten und können entsprechend interpretiert werden. Die Bus-codierten Daten können insbesondere als Datenpakete übermittelt werden.

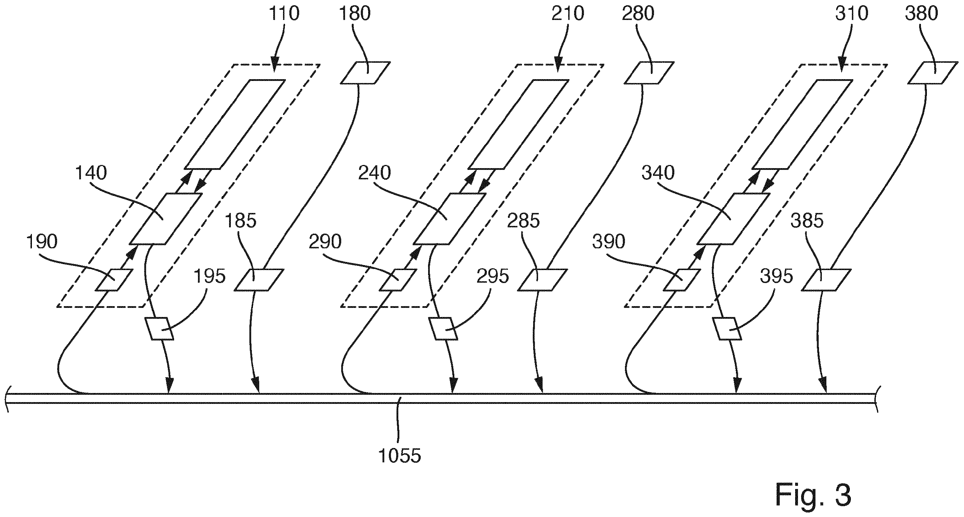

Figur 3 zeigt den schematischen Datenaustausch zwischen drei benachbarten Förderrollen 110, 210, 310 auf. Die innerhalb des Förderrollenkörpers angeordneten, an der Datenübertragung teilnehmenden Komponenten, sind hierbei durch unterbrochene Linien umschlossen, die außerhalb des Förderrollenkörpers angeordneten Signalleitungswege sind mittels durchgezogener Linien gekennzeichnet.

Wie hieraus erkennbar ist, liefern außerhalb des Rollenkörpers angeordnete Sensoren 180, 280, 380 in die Signalbusleitung 1055 Zustandsdaten in Form von Sensordaten 185, 285, 385 welche die Anwesenheit oder Abwesenheit eines zu fördernden Gegenstands an einem bestimmten Ort, beispielsweise in einer bestimmten Förderzone, charakterisieren.

Weiterhin übermittelt jede Steuerungseinheit Eigenzustandsdaten 195, 295, 395, welche einen Eigenzustand der jeweiligen Förderrolle beschreiben, in die Signalbusleitung 1055. Die Eigenzustandsdaten 195, 295, 395 können beispielsweise Informationen darüber enthalten, ob die Förderrolle sich bewegt oder nicht und mit welcher Geschwindigkeit sich die Förderrolle bewegt.

Diese Sensordaten 185, 285, 385 und die Eigenzustandsdaten 195, 395 anderer Förderrollen werden als Zustandsdaten 290 von einer motorbetriebenen Förderrolle 210 empfangen und in deren Steuerungseinheit 240 logisch verarbeitet.

Diese logische Verarbeitung kann beispielsweise solcherart erfolgen, dass die Steuerungseinheit, die von einem Sensor 280, der die Anwesenheit eines zu fördernden Gegenstands in der eigenen Förderzone, also derjenigen, in der diese Motorrolle 210 verbaut ist, signalisiert, zugleich die Abwesenheit eines zu fördernden Gegenstandes in der stromabwärts gelegenen Förderzone hierzu von einem anderen Sensor 380 erhält, der Antriebseinheit dieser motorbetriebenen Förderrolle 210 einen Antriebsbefehl zum Fördern des Gegenstands in die stromabwärts gelegene Förderzone übermittelt, wenn sich die Steuerungseinheit in einem zum Einzelplatzabzug programmierten Modus befindet.

In einer anderen Programmierung der Steuerungseinheit 240 zur Durchführung eines Blockabzugs wird die Steuerungseinheit 240 den Antrieb zur Förderung eines Gegenstands ansteuern, wenn sie durch den ihrer eigenen Förderzone zugeordneten Sensor 280 ein Sensorsignal als Zustandssignal empfängt, das die Anwesenheit eines zu fördernden Gegenstands in der eigenen Förderzone signalisiert und zugleich durch die stromaufwärts gelegene motorbetriebene Förderrolle 110, die ein Eigenzustandssignal 195 generiert und als Zustandssignal 290 empfangen wurde, welches das Anlaufen dieser stromaufwärts gelegenen Förderrolle signalisiert.

### Bezugszeichenliste

- 10, 110, 210, 310: Förderrolle
- 20: Rollenkörper
- 21: erster Achsstummel
- 22: zweiter Achsstummel
- 23: erstes Wälzlager
- 24: zweites Wälzlager
- 25: erste Endkappe
- 26: zweite Endkappe
- 26a: Nuten
- 30: Antriebseinheit
- 40, 140, 240, 340: Steuerungseinheit
- 41: elektronischen Speicher
- 42: Temperatursensor
- 50: Busleitung
- 51: Steckverbindung

- 100, 200, 300: Förderzone
- 180, 280, 380: Lichtschrankensensor
- 181, 281, 381: elektrische Konnektierung
- 185, 285, 385: Sensordaten
- 195, 295, 395: Eigenzustandsdaten
- 190, 290, 390: Zustandssignal / Zustandsdaten
- 1055: Signalbusleitung
- 1056: Energieleitung
- 1150, 1250, 1350: Busanschlussleitung mit Stecker

## Patentansprüche

1. Motorbetriebene Förderrolle (110, 210, 310), umfassend:
einen drehbar um eine Rollenachse gelagerten Rollenkörper (20),
eine innerhalb des Rollenkörpers angeordnete Antriebseinheit (30), die ausgebildet ist, um eine Rotationsbewegung um die Rollenachse zwischen einem Achselement (21, 22) und dem Rollenkörper (20) zu erzeugen, umfassend
eine innerhalb des Rollenkörpers (20) angeordnete Steuerungseinheit (40, 240),
die ausgebildet ist,
- um ein Zustandssignal (290) von außerhalb des Rollenkörpers zu empfangen,
- in Abhängigkeit des Zustandssignals (290) ein Steuerungssignal, das eine Antriebscharakteristik beschreibt, zu generieren,
- die Antriebseinheit (30) mittels des Steuerungssignals anzusteuern,
- ein Eigenzustandssignal (195, 295, 395), welches das Zustandssignal und/oder die Antriebscharakteristik beschreibt, zu generieren, und
- dieses Eigenzustandssignal nach außerhalb des Rollenkörpers zu senden, **dadurch gekennzeichnet,**
**dass** die Steuerungseinheit (140, 240, 340) ausgebildet ist, um als Zustandssignal
- ein Sensorsignal (185, 285, 385) eines außerhalb des Rollenkörpers angeordneten Sensors (180, 280, 380),
und/oder
- ein Eigenzustandssignal (195, 295, 395) einer anderen motorbetriebenen Förderrolle (110, 210, 310),
zu empfangen und die Steuerungseinheit ausgebildet ist, um anhand dieses Sensorsignals und/oder dieses Eigenzustandssignals das Steuerungssignal zu generieren.

2. Motorbetriebene Förderrolle (110, 210, 310) nach Anspruch 1, **dadurch gekennzeichnet,**
**dass** das Achselement (21) als Hohlachse ausgebildet ist und zur drehmomentfesten Befestigung in einem Förderrollengestell ausgebildet ist und
**dass** eine Signalleitung durch die Hohlachse (21) geführt ist, die mit der Steuerungseinheit zur Übertragung des Steuerungssignals verbunden ist.

3. Motorbetriebene Förderrolle (110, 210, 310) nach Anspruch 1 oder 2,
**dadurch gekennzeichnet,**
**dass** zwischen der Steuerungseinheit (140, 240, 340) und einem externen Anschluss einer Signalleitung, die mit der Steuerungseinheit zur Übertragung des Steuerungssignals verbunden ist, eine Drehlagerung (23) des Achselementes (21) zum Rollenkörper angeordnet ist.

4. Motorbetriebene Förderrolle (110, 210, 310) nach einem der vorhergehenden Ansprüche **dadurch gekennzeichnet,**
**dass** die Steuerungseinheit (140, 240, 340) zumindest einen Betriebsmodus aufweist,
in dem sie zum Empfang eines digitalen Zustandssignals (190, 290, 390) ausgebildet ist,
wobei das digitale Zustandssignal vorzugsweise ein Bus-codiertes Signal ist.

5. Motorbetriebene Förderrolle (110, 210, 310) nach einem der vorhergehenden Ansprüche **dadurch gekennzeichnet,**
**dass** die Steuerungseinheit (140, 240, 340) ausgebildet ist, um als Zustandssignal (190, 290, 390) ein digitales Signal zu empfangen und als Eigenzustandssignal (195, 295, 395) ein digitales Signal zu versenden, wobei vorzugsweise das Zustandssignal (190, 290, 390) eine für eine Bus-gestützte Kommunikation ausgebildete erste Datenstruktur mit einem ersten Adressdatenteil und einem ersten Inhaltsdatenteil aufweist und das Eigenzustandssignal (195, 295, 395) eine für eine Bus-gestützte Kommunikation ausgebildete zweite Datenstruktur mit einem zweiten Adressdatenteil und einem zweiten Inhaltsdatenteil aufweist, wobei weiter vorzugsweise die erste Datenstruktur und die zweite Datenstruktur übereinstimmend sind.

6. Motorbetriebene Förderrolle (110, 210, 310) nach einem der vorhergehenden Ansprüche **dadurch gekennzeichnet,**
**dass** die Antriebscharakteristik ausgewählt ist aus:
- einem AN/AUS-Zustand der Antriebseinheit,
- einem Antriebsdrehmoment,
- einem Antriebsdrehmomentverlauf der Antriebseinheit,
- einer Geschwindigkeit der Antriebseinheit oder des Rollenkörpers,
- einem Geschwindigkeitsverlauf der Antriebseinheit oder des Rollenkörpers,
- einem Bremsdrehmoment der Antriebseinheit, oder
- einem Bremsdrehmomentverlauf der Antriebseinheit,
oder einer Kombination von zwei oder mehr dieser Antriebscharakteristika.

7. Motorbetriebene Förderrolle (110, 210, 310) nach einem der vorhergehenden Ansprüche **dadurch gekennzeichnet,**
**dass** die Steuerungseinheit (140, 240, 340) eine Speichervorrichtung aufweist, in der ein Antriebscharakteristikverlauf oder eine Mehrzahl von Antriebscharakteristikverläufen gespeichert ist,
wobei jedem Antriebscharakteristikverlauf eine individuelle binäre Codierung zugeordnet ist,
und **dass** die Speichervorrichtung ausgebildet ist, um ein empfangenes digitales Signal mit den individuellen binären Codierungen zu vergleichen und die Antriebseinheit mit einem Antriebscharakteristikverlauf anzusteuern, dem eine individuelle Codierung zugeordnet ist, die dem empfangenen digitalen Signal entspricht.

8. Motorbetriebene Förderrolle (110, 210, 310) nach einem der vorhergehenden Ansprüche **dadurch gekennzeichnet,**
**dass** die Antriebseinheit (30) einen bürstenlosen Elektromotor umfasst und die Steuerungseinheit eine Kommutierungselektronik zur Ansteuerung des Elektromotors umfasst.

9. Motorbetriebene Förderrolle (110, 210, 310) nach einem der vorhergehenden Ansprüche **dadurch gekennzeichnet,**
**dass** die Steuerungseinheit (140, 240, 340) einen elektronischen Speicher umfasst und ausgebildet ist, um
- Programmierungsdaten zu empfangen,
- die Programmierungsdaten in dem elektronischen Speicher abzuspeichern, und
- um in Abhängigkeit der Programmierungsdaten das Steuerungssignal zu generieren.

10. Motorbetriebene Förderrolle (110, 210, 310) nach dem vorherigen Anspruch
**dadurch gekennzeichnet,**
**dass** die Steuerungseinheit (140, 240, 340) ausgebildet ist, um in Abhängigkeit der Programmierungsdaten zwischen
- einem ersten Steuerungssignal für einen ersten Steuerungsablauf, welcher einem Einzelplatzabzugsmodus entspricht, in dem in Abhängigkeit eines Zustandssignals, das einen freien Zielraum signalisiert, ein Steuerungssignal generiert wird, das eine die Antriebseinheit aktivierende Antriebscharakteristik darstellt, und
- einem zweiten Steuerungssignal für einen zweiten Steuerungsablauf, welcher einem Blockabzugsmodus entspricht, in dem in Abhängigkeit eines Zustandssignals, das die Aktivierung einer Antriebseinheit einer benachbarten motorbetriebenen Förderrolle signalisiert, ein Steuerungssignal generiert wird, das eine die Antriebseinheit aktivierende Antriebscharakteristik darstellt, umzuschalten

11. Motorbetriebene Förderrolle (110, 210, 310) nach einem der beiden vorhergehenden Ansprüche, **dadurch gekennzeichnet,**
**dass** die Steuerungseinheit (140, 240, 340) einen elektronischen Speicher umfasst und ausgebildet ist, um ein Programmiersignal zu empfangen und um auf Grundlage und in Abhängigkeit der Programmieranweisung
- eine logische, insbesondere durch einen Algorithmus beschriebene Abhängigkeit zwischen einem Zustandssignal und einer Antriebscharakteristik,
- eine logische, insbesondere durch einen Algorithmus beschriebene Abhängigkeit zwischen einem Zustandssignal und einem Antriebscharakteristikverlauf, oder
- einen Antriebscharakteristikverlauf
in dem elektronischen Speicher abzuspeichern, wobei die Programmieranweisung vorzugsweise digital, insbesondere eine Bus-codierte Programmieranweisung ist.

12. Motorbetriebene Förderrolle (110, 210, 310) nach einem der vorhergehenden Ansprüche **dadurch gekennzeichnet,**
**dass** die Steuerungseinheit (140, 240, 340) ausgebildet ist, um in einem Analogbetriebsmodus ein analoges Steuerungssignal zu empfangen und in Abhängigkeit des analogen Steuerungssignals die Antriebseinheit anzusteuern, bei Empfang eines vorbestimmten analogen Steuerungssignals in einen Digitalbetriebsmodus zu wechseln,
im Digitalbetriebsmodus digitale Steuerungsdaten zu empfangen und als Steuerungssignal oder Programmiersignal zu verarbeiten,
wobei die digitalen Steuerungsdaten vorzugsweise Bus-codierte Steuerungsdaten sind.

13. Förderrollenanordnung mit zumindest einer ersten motorbetriebenen Förderrolle (110) nach einem der vorhergehenden Ansprüche und einer zweiten motorbetriebenen Förderrolle (210) nach einem der vorhergehenden Ansprüche,
**dadurch gekennzeichnet,**
**dass** die erste innerhalb des Rollenkörpers des ersten motorbetriebenen Förderrolle angeordnete Steuerungseinheit (140) und die zweite innerhalb des Rollenkörpers des zweiten motorbetriebenen Förderrolle angeordnete Steuerungseinheit (240) mittels einer digitalen Signalleitung (1055) miteinander verbunden sind und die erste Steuerungseinheit der ersten motorbetriebenen Förderrolle ausgebildet ist, um digitale erste Eigenzustandsdaten der zweiten Steuerungseinheit zuzusenden, und digitale zweite Eigenzustandsdaten von der zweiten Steuerungseinheit zu empfangen und um die Antriebseinheit der ersten motorbetriebenen Förderrolle in Abhängigkeit der von der zweiten motorbetriebenen Förderrolle empfangenen zweiten Eigenzustandsdaten anzusteuern wobei die ersten und zweiten Eigenzustandsdaten vorzugsweise Bus-codierte Daten sind.

14. Förderrollenanordnung nach dem vorhergehenden Anspruch,
**dadurch gekennzeichnet,**
**dass** die erste motorbetriebene Förderrolle (110) angeordnet ist zum Fördern eines Förderguts in einer ersten Förderzone (100) und die zweiten motorbetriebene Förderrolle (210) angeordnet ist zum Fördern eines Förderguts in einer zweiten Förderzone (200) und dass die ersten und zweiten Eigenzustandsdaten Informationen über die Anwesenheit eines Förderguts in der ersten Förderzone (100) oder über die Anwesenheit eines Förderguts in der zweiten Förderzone (200) enthalten

15. Förderrollenanordnung nach einem der beiden vorhergehenden Ansprüche,
**dadurch gekennzeichnet,**
**dass** die Eigenzustandsdaten (195, 295, 395) ausgewählt sind aus:
- Eigenzustandsdaten, welche einen Antriebszustand der Antriebseinheit der Förderrolle beschreiben, Eigenzustandsdaten, welche ein Sensorsignal eines an die Förderrolle (110, 210, 310) angeschlossenen Sensors beschreiben, Eigenzustandsdaten, welche einen Steuerbefehl für die Antriebseinheit der Förderrolle beschreiben.

## Claims

1. A motordriven conveyor roller 110, 210, 310), comprising:
a roller body (20) mounted so as to be able to rotate about a roller axle,
a drive unit (30) arranged inside the roller body and adapted to generate a rotational movement about the roller axle between an axle element (21, 22) and
the roller body
a control unit (40, 240) that is arranged inside the roller body (20) and
that is designed
- to receive a state signal (290) from outside the roller body,
- to generate a control signal that describes a drive characteristic on the basis of the state signal,
- to control the drive unit (30) by way of the control signal,
- to generate a self-state signal 195, 295, 395) that describes the state signal and/or the drive characteristic, and
- to transmit this self-state signal outside the roller body,
**characterized in**
**that** the control unit (140, 240, 340) is adapted to receive as the state signal
- a sensor signal (185, 285, 385) from a sensor (180, 280, 380) arranged outside the roller body
and/or
- a self-state signal (195, 295, 395) from another motordriven conveyor roller (110. 210. 310)
and the control unit is adapted to generate the control signal on the basis of said sensor signal and/or this self-state signal.

2. The motorized conveyor roller (110, 210, 310) according to claim 1,
**characterized in**
**that** the axle element (21) is designed as a hollow axle and is adapted to be fastened in a conveyor roller frame in a manner fixed in terms of torque, and in that a signal line is routed through the hollow axle (21) and is connected to the control unit so as to transmit the control signal.

3. The motorized conveyor roller (110, 210, 310) according to claim 1 or 2, **characterized in**
**that** a rotary bearing (23) of the axle element (21) with respect to the roller body is arranged between the control unit (140, 240, 340) and an external connection of a signal line that is connected to the control unit so as to transmit the control signal.

4. The motorized conveyor roller (110, 210, 310) according to any of the preceding claims,
**characterized in**
**that** the control unit (140, 240, 340) has at least one operating mode in which it is adapted to receive a digital state signal (190, 290, 390), wherein the digital state signal is preferably a bus-coded signal.

5. The motorized conveyor roller (110, 210, 310) according to any of the preceding claims,
**characterized in**
**that** the control unit (140, 240, 340) is adapted to receive a digital signal as state signal (190, 290, 390) and to send a digital signal as self-state signal (195, 295, 395) ,
wherein the state signal (190, 290, 390) preferably has a first data structure designed for bus-based communication, having a first address data part and a first content data part and the self-state signal (195, 295, 395) has a second data structure designed for bus-based communication, having a second address data part and a second content data part,
wherein the first data structure and the second data structure more preferably match.

6. The motorized conveyor roller (110, 210, 310) according to any of the preceding claims,
**characterized in that** the drive characteristic is selected from:
- an ON/OFF state of the drive unit,
- a drive torque,
- a drive torque profile of the drive unit,
- a speed of the drive unit or of the roller body,
- a speed profile of the drive unit or of the roller body,
- a braking torque of the drive unit, or
- a braking torque profile of the drive unit,
or a combination of two or more of these drive characteristics.

7. The motorized conveyor roller (110, 210, 310) according to any of the preceding claims,
**characterized in**
**that** the control unit (140, 240, 340) has a storage device in which a drive characteristic profile or a plurality of drive characteristic profiles are stored,
wherein each drive characteristic profile is assigned an individual binary coding, and in that the storage device is adapted to compare a received digital signal with the individual binary coding and to control the drive unit with a drive characteristic profile having an assigned individual coding that corresponds to the received digital signal.

8. The motorized conveyor roller (110, 210, 310) according to any of the preceding claims,
**characterized in**
**that** the drive unit (30) comprises a brushless electric motor and the control unit comprises commutation electronics for controlling the electric motor.

9. The motorized conveyor roller (110, 210, 310) according to any of the preceding claims,
**characterized in**
**that** the control unit (140, 240, 340) comprises an electronic memory and is designed to
- receive programming data,
- store the programming data in the electronic memory, and
- generate the control signal on the basis of the programming data.

10. The motorized conveyor roller (110, 210, 310) according to the preceding claim, **characterized in**
**that** the control unit (140, 240, 340) is designed, on the basis of the programming data, to change over between
- a first control signal for a first control sequence that corresponds to a single discharge mode, in which a control signal that represents a drive characteristic activating the drive unit is generated on the basis of a state signal that signals a free destination space, and
- a second control signal for a second control sequence that corresponds to a block discharge mode, in which a control signal that represents a drive characteristic activating the drive unit is generated on the basis of a state signal that signals the activation of a drive unit of an adjacent motordriven conveyor roller.

11. The motorized conveyor roller (110, 210, 310) according to any of the two preceding claims,
**characterized in that** the control unit (140, 240, 340) comprises an electronic memory and is adapted to receive a programming signal and, on the basis of and depending on the programming instruction, to store
- a logic dependency, in particular described by an algorithm, between a state signal and a drive characteristic,
- a logic dependency, in particular described by an algorithm, between a state signal and a drive characteristic profile, or
- a drive characteristic profile
in the electronic memory, wherein the programming instruction is preferably digital, in particular a bus-coded programming instruction.

12. The motorized conveyor roller (110, 210, 310) according to any of the preceding claims,
**characterized in that** the control unit (140, 240, 340) is designed,
in an analog operating mode, to receive an analog control signal and to control the drive unit on the basis of the analog control signal,
to change to a digital operating mode upon receiving a predetermined analog control signal,
to receive digital control data in the digital operating mode and to process them as a control signal or programming signal,
wherein the digital control data are preferably bus-coded control data.

13. A conveyor roller arrangement having at least one first motorized conveyor roller (110) according to any of the preceding claims and a second motorized conveyor roller (210) according to any of the preceding claims,
**characterized in**
**that** the first control unit (140) arranged inside the roller body of the first motorized roller and the second control unit (240) arranged inside the roller body of the second motorized roller are connected to one another by way of a digital signal line (1055) and the first control unit of the first motorized conveyor roller is adapted to send digital first self-state data to the second control unit, and to receive digital second self-state data from the second control unit and to control the drive unit of the motordriven first conveyor roller on the basis of the second self-state data received from the second motordriven conveyor roller, wherein the first and second self-state data are preferably bus-coded data.

14. The conveyor roller arrangement according to the preceding claim, **characterized in**
**that** one first motordriven conveyor roller (110) is arranged so as to convey a conveyed material in a first conveying zone (100) and the second motordriven conveyor roller (210) is arranged so as to convey a conveyed material in a second conveying zone (200), and in that the first and second self-state data contain information about the presence of a conveyed material in the first conveying zone (100) or about the presence of a conveyed material in the second conveying zone (200).

15. The conveyor roller arrangement according to any of the two preceding claims, **characterized in that** the self-state data are selected from:
- self-state data that describe a drive state of the drive unit of the conveyor roller, self-state data that describe a sensor signal from a sensor connected to the conveyor roller (110, 210. 310),
self-state data that describe a control command for the drive unit of the conveyor roller.

## Revendications

1. Rouleau transporteur motorisé (110, 210, 310), comprenant :
un corps de rouleau s'appuyant en rotation autour d'un axe de rouleau (20),
une unité d'entraînement disposée à l'intérieur du corps de rouleau (30), qui est conçue pour générer un mouvement de rotation autour de l'axe de rouleau entre un élément d'axe (21, 22) et le corps de rouleau (20), comprenant une unité de commande (40, 240) disposée à l'intérieur du corps de rouleau (20),
qui est conçue pour
- recevoir un signal d'état (290) depuis l'extérieur du corps de rouleau,
- en fonction du signal d'état (290), générer un signal de commande qui décrit une caractéristique d'entraînement,
- entraîner l'unité d'entraînement (30) au moyen du signal de commande,
- générer un signal d'état propre (195, 295, 395) qui décrit le signal d'état et/ou la caractéristique d'entraînement, et
- envoyer ce signal d'état propre vers l'extérieur du corps de rouleau, **caractérisé en ce que**
l'unité de commande (140, 240, 340) est conçue pour recevoir en tant que signal d'état
- un signal de détection (185, 285, 385) d'un capteur (180, 280, 380) disposé à l'extérieur du corps de rouleau,
et/ou recevoir
- un signal d'état propre (195, 295, 395) d'un autre rouleau transporteur motorisé (110, 210, 310),
et que l'unité de commande est conçue pour, à partir de ce signal de détection et/ou de ce signal d'état propre, générer le signal de commande.

2. Rouleau transporteur motorisé (110, 210, 310) selon la revendication 1, **caractérisé en ce que**
l'élément d'axe (21) se présente sous forme d'un axe creux et est conçu pour être fixé avec un couple serré dans un châssis de rouleau transporteur et qu'une ligne de transmission de signaux qui est connectée à l'unité de commande pour transférer le signal de commande passe à travers l'axe creux (21).

3. Rouleau transporteur motorisé (110, 210, 310) selon la revendication 1 ou 2, **caractérisé en ce que**,
entre l'unité de commande (140, 240, 340) et un raccordement externe d'une ligne de transmission de signaux qui est connectée à l'unité de commande pour transférer le signal de commande, est disposé un palier rotatif (23) de l'élément axe (21) du corps de rouleau.

4. Rouleau transporteur motorisé (110, 210, 310) selon une des revendications précédentes, **caractérisé en ce que**
l'unité de commande (140, 240, 340) présente au moins un mode de fonctionnement
du fait qu'elle est conçue pour recevoir un signal d'état numérique (190, 290, 390),
le signal d'état numérique étant de préférence un signal codé par bus.

5. Rouleau transporteur motorisé (110, 210, 310) selon une des revendications précédentes, **caractérisé en ce que**
l'unité de commande (140, 240, 340) est conçue pour recevoir un signal numérique en tant que signal de commande (190, 290, 390) et pour envoyer un signal numérique en tant que signal d'état propre (195, 295, 395), le signal d'état (190, 290, 390) présentant de préférence une première structure de données conçue pour une communication assistée par bus ayant une première partie de données d'adresse et une première partie de données de contenu et que le signal d'état propre (195, 295, 395) présente une seconde structure de données conçue pour une communication assistée par bus ayant une seconde partie de données d'adresse et une seconde partie de données de contenu,
la première structure de donnée et la seconde structure de données coïncidant en outre de préférence.

6. Rouleau transporteur motorisé (110, 210, 310) selon une des revendications précédentes, **caractérisé en ce que** la caractéristique d'entraînement est sélectionnée parmi :
- un état d'entraînement MARCHE/ARRÊT de l'unité d'entraînement,
- un couple d'entraînement,
- une évolution de couple d'entraînement de l'unité d'entraînement,
- une vitesse de l'unité d'entraînement ou du corps de rouleau,
- une évolution de vitesse de l'unité d'entraînement ou du corps de rouleau,
- un couple de freinage de l'unité d'entraînement, ou
- une évolution de couple de freinage de l'unité d'entraînement,
ou une combinaison de deux ou plus de ces caractéristiques d'entraînement.

7. Rouleau transporteur motorisé (110, 210, 310) selon une des revendications précédentes, **caractérisé en ce que**
l'unité de commande (140, 240, 340) présente un dispositif de mémoire dans lequel une évolution de caractéristique d'entraînement ou une pluralité d'évolutions de caractéristiques d'entraînement sont enregistrées,
un codage binaire individuel étant associé à chaque évolution de caractéristique d'entraînement,
et que le dispositif de mémoire est conçu pour comparer un signal numérique reçu avec les codages binaires individuels et entraîner l'unité d'entraînement avec une évolution de caractéristique d'entraînement à laquelle est associée à un codage individuel qui correspond au signal numérique reçu.

8. Rouleau transporteur motorisé (110, 210, 310) selon une des revendications précédentes, **caractérisé en ce que**
l'unité d'entraînement (30) présente un moteur électrique sans balais et que l'unité de commande comprend un système électronique de commutation pour entraîner le moteur électrique.

9. Rouleau transporteur motorisé (110, 210, 310) selon une des revendications précédentes, **caractérisé en ce que**
l'unité de commande (140, 240, 340) comprend une mémoire électronique et est conçue pour recevoir un signal de programmation et pour, sur la base et en fonction de l'instruction de programmation
- enregistrer une dépendance logique, en particulier décrite par un algorithme, entre un signal d'état et une caractéristique d'entraînement,
- une dépendance logique, en particulier décrite par un algorithme, entre un signal d'état et une évolution de caractéristiques d'entraînement, ou
- une évolution de caractéristiques d'entraînement dans la mémoire électronique, l'instruction de programmation étant de préférence une instruction de programmation codée numériquement, en particulier codé par bus.

10. Rouleau transporteur motorisé (110, 210, 310) selon la revendication précédente, **caractérisé en ce que**
l'unité de commande (140, 240, 340) est conçue, en fonction des données de programmation, pour permuter entre
- un premier signal de commande pour un premier cycle de commande qui correspond à un mode d'extraction d'emplacement individuel dans lequel, en fonction d'un signal d'état qui signale un espace de destination libre, est généré un signal de commande qui constitue une caractéristique d'entraînement activant l'unité d'entraînement, et
- un second signal de commande pour un second cycle de commande qui correspond à un mode d'extraction de bloc dans lequel, en fonction d'un signal d'état qui signale l'activation d'une unité d'entraînement d'un rouleau transporteur motorisé voisin, est généré un signal de commande qui constitue une caractéristique d'entraînement activant l'unité d'entraînement.

11. Rouleau transporteur motorisé (110, 210, 310) selon une des deux revendications précédentes, **caractérisé en ce que**
l'unité de commande (140, 240, 340) comprend une mémoire électronique et est conçue pour recevoir un signal de programmation et, sur la base et en fonction de l'instruction de programmation, pour enregistrer
- une dépendance logique, en particulier décrite par un algorithme, entre un signal d'état et une caractéristique d'entraînement,
- une dépendance logique, en particulier décrite par un algorithme, entre un signal d'état et une évolution de caractéristique d'entraînement, ou
- une évolution de caractéristique d'entraînement
dans la mémoire électronique, l'instruction de programmation étant en particulier numérique, en particulier une instruction de programmation codée par bus.

12. Rouleau transporteur motorisé (110, 210, 310) selon une des revendications précédentes, **caractérisé en ce que**
l'unité de commande (140, 240, 340) est conçue pour recevoir un signal de commande analogique dans un mode de fonctionnement analogique et pour commander l'unité d'entraînement en fonction du signal de commande analogique, à réception d'un signal de commande analogique prédéfini, passer en mode de fonctionnement numérique,
en mode de fonctionnement numérique, recevoir des données de commande numériques et les traiter comme signal de commande ou signal de programmation,
les données de commande numérique étant de préférence des données de commande codée par bus.

13. Dispositif de rouleaux transporteurs comportant au moins un premier rouleau transporteur motorisé (110) selon une des revendications précédentes et un second rouleau transporteur motorisé (210) selon une des revendications précédentes,
**caractérisé en ce que**
la première unité de commande (140) disposée à l'intérieur du corps de rouleau du premier rouleau transporteur motorisé et la seconde unité de commande (240) disposée à l'intérieur du corps de rouleau du second rouleau transporteur motorisé sont connectées entre elles au moyen d'une ligne de transmission de signaux (1055) et que la première unité de commande du premier rouleau transporteur motorisé est conçue pour envoyer des premières données d'état propres numériques de la seconde unité de commande, et pour recevoir des secondes de données d'état propres de la part de la seconde unité de commande, et pour entraîner l'unité d'entraînement du premier rouleau transporteur motorisé en fonction des secondes données d'état propres reçues du second rouleau transporteur motorisé,
les premières et secondes données d'état propres étant de préférence des données codées par bus.

14. Dispositif de rouleaux transporteurs selon la revendication précédente, **caractérisé en ce que**
le premier rouleau transporteur motorisé (110), pour transporter un produit à transporter, est disposé dans une première zone de transport (100) et le second rouleau transporteur motorisé (210), pour transporter un produit à transporter, dans une seconde zone de transport (200) et que les premières et secondes données d'état propres contiennent des informations sur la présence d'un produit à transporter dans la première zone de transport (100) ou sur la présence d'un produit à transporter dans la seconde zone de transport (200).

15. Dispositif de rouleaux transporteurs selon une des deux revendications précédentes,
**caractérisé en ce que**
les données d'état propres (195, 295, 395) sont sélectionnées parmi:
- des données d'état propres qui décrivent un état d'entraînement de l'unité d'entraînement du rouleau transporteur,
des données d'état propres qui décrivent un signal de détection d'un détecteur raccordé au rouleau transporteur (110, 210, 310),
des données d'état propres qui décrivent une instruction de commande pour l'unité d'entraînement du rouleau transporteur.
